# EUROPEAN PATENT SPECIFICATION

(11) **EP 4 454 476 B1**
(45) Date of publication and mention of the grant of the patent: **22.07.2026**
(21) Application number: 24171706.5
(22) Date of filing: 22.04.2024
(51) Int. Cl.: A23G 9/08, A23G 9/12, A23G 9/22, F25B 21/02, F28D 1/06, F28D 15/02

(54) **COOLING SYSTEM AND MACHINE FOR THE PRODUCTION OF ICE CREAMS COMPRISING SUCH SYSTEM**
KÜHLSYSTEM UND MASCHINE ZUR HERSTELLUNG VON SPEISEEIS MIT EINEM SOLCHEN SYSTEM
SYSTEME DE REFROIDISSEMENT ET MACHINE POUR LA PRODUCTION DE GLACES COMPRENANT UN TEL SYSTEME

(30) Priority: 27.04.2023 IT 202300008244
(43) Date of publication of application: 30.10.2024
(73) Proprietor: TOOA S.r.l., 60044 Fabriano (AN) (IT)
(72) Inventor: RIDERELLI BELLI, Marcello, 60027 Osimo (AN) (IT)
(74) Representative: Bonatto, Marco

(56) References cited:
- EP-A1- 2 266 418
- WO-A1-2022/084882
- CN-A- 104 171 249
- CN-U- 214 546 990
- CN-U- 214 710 116

## Description

### Field of the invention

The present invention refers to a cooling system, according to appended claim 1, a to be applied to machines, particularly in machines for food products or pharmaceutical/cosmetic/chemical products, even more particularly for the domestic production of food, for example a machine for producing single portions of ice cream, mousse, sorbets, creams, or still other food.

The invention also relates to a machine for the production of ice creams, comprising the cooling system according to at least appended claim 1.

The following description specifically refers to food machines, particularly for the production of ice cream, however, the Applicant specifies that such cooling system is not intended to be limited to the use in food machines but can be applied for cooling any type of cream or product.

### State of the art

A cooling system particularly adapted to be applied to machines for producing single portions of ice cream, sorbet, mousse, or other cold food creams is known from Italian Patent Application No. IT102020000024817 and corresponding international patent application WO2022/084882**.**

Such cooling system is extremely effective and capable of cooling in a homogeneous and almost immediate manner (maximum cooling rate higher than **1**°C/sec) the ice cream being prepared or other food mixture, avoiding the creation of ice blocks and clumps, thus allowing single portions of ice cream to be prepared almost instantaneously and on demand.

Such cooling system is further compact, space-saving, extremely effective, and eco-friendly since it does not use refrigerant gases nor requires the cold chain.

The cooling system described in Patent Application No. IT102020000024817 comprises four Peltier cells **2** fixed on the external flanks of a central body made of aluminium **1** - which forms the receptacle in which the ice cream is creamed - through two elements made of steel wire **51** and two respective tensioning metallic bars **52.**

Each element made of steel wire **51** is approximately U- or C-shaped and its threaded ends pass through two holes formed on a respective bar **52.**

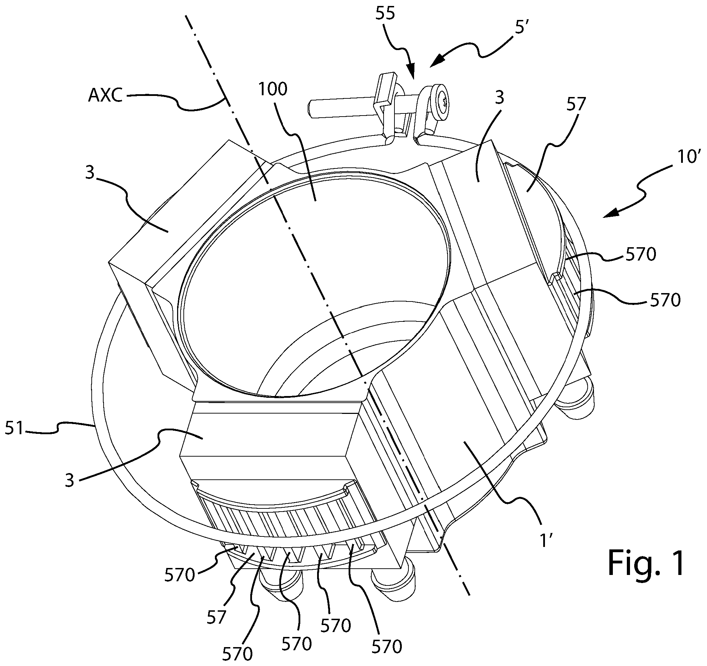

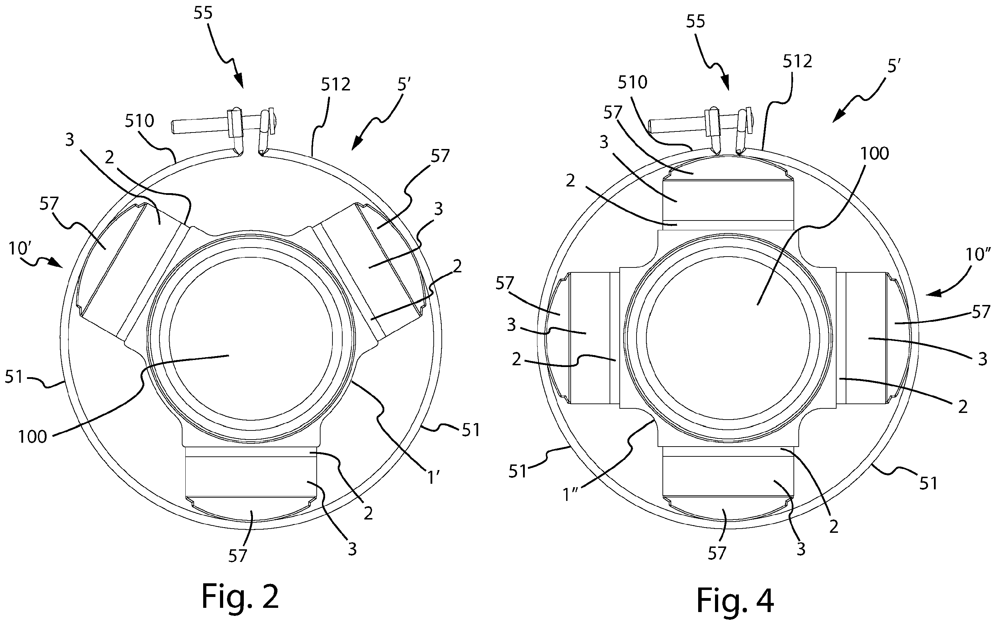

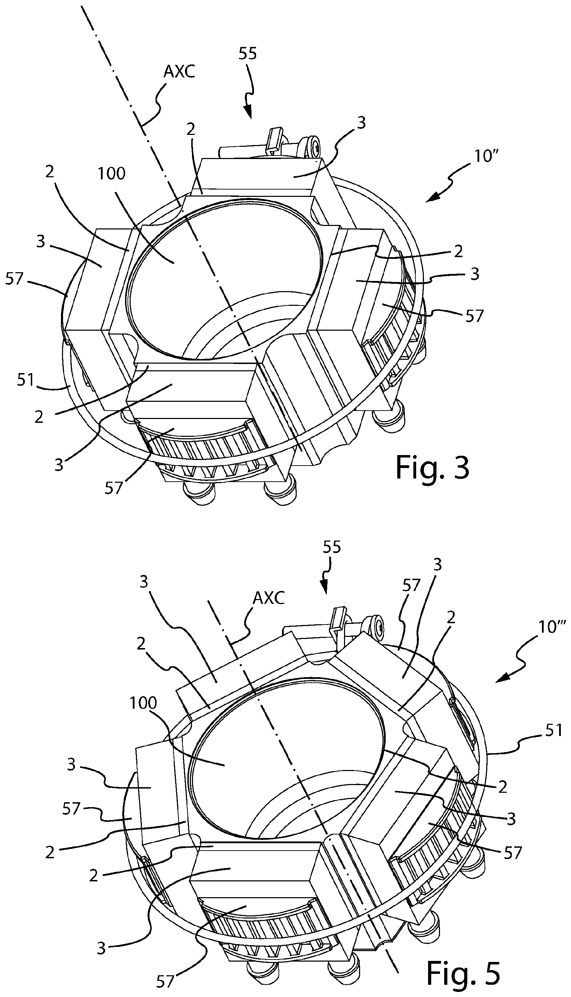

By screwing them on such threaded ends, two respective threaded nuts **53** rest against the external face of the bar **52** and push it towards the bottom of the cavity formed by the steel wire **51** (figure **5** of Application No. IT102020000024817**)** by pushing against the external flanks of the central body **1** two thermoelectric modules - referred to as "Peltier cells" in the present description - **2** located in positions diametrically opposite to each other (figures **1****,** **2** of Application No. IT102020000024817**).**

The author of the present invention observed that such known fixing system allows only an even number of Peltier cells **2** to be mounted on the external flanks of the central body **1,** and in the practice allows only two or four Peltier cells **2** to be mounted, actually making mounting for example six, eight, or a greater even number of them impossible or very disadvantageous.

Indeed, an assembly formed by a steel wire **51** and the relative bar **52** is capable of pushing against the main body **1** exactly two Peltier cells, not a different number.

In order to fix to the main body **1** multiple pairs of Peltier cells **2,** the same number of steel wires **51** are to be mounted, inevitably overlapping each other in the direction of the central axis of the main body **1** itself.

As the number of overlapping wires **51** increases, some Peltier cells **2,** due to the bulk of the various components, are pressed by the respective wire **51** in positions increasingly closer to the lower or upper edge of the cells themselves, causing undesired concentrations of pressure on the flanks of the central body **1** and by fixing the Peltier cells increasingly less firmly, and therefore limiting the maximum number to only four Peltier cells which in the practice can be mounted in a known cooling system **10** described in Application No. IT102020000024817**.**

Such maximum number is also limited, actually, by the bulk of the different bars **52** as well as the rapid increase of the mounting time and the production costs of the known cooling system **50** as a function of the increasing number of pairs of wire **51** + bar **52** mounted on the flanks of a main body **1.**
The patent documents CN104171249A**,** EP2266418A2**,** CN214710116U**,** CN214546990U disclose further examples of known ice cream machines.

Therefore, an object of the present invention is to provide a cooling system for processing a mixture, which allows to also fix a greater number, also odd, and at least three, of Peltier cells on the flanks of a central body **1** in a mechanically easier, cheaper, quicker, and more efficient manner.

### Summary of the invention

These and other objects according to the present invention are achieved by making a cooling system as set forth in claim **1.**

Further features of the system are the object of the dependent claims.

A further object of the present invention is a machine, particularly a machine for the production of ice creams as set forth in claim 8.

The features and the advantages of a cooling system for machines for the production of ice creams according to the present invention will be more apparent from the following exemplary and non-limiting description, given with reference to the following attached schematic figures.

### List of the figures

Figure **1** shows a top perspective view of some components of a cooling system according to a first embodiment of the present invention;
figure **2** shows a top view of the cooling system of figure **1****;**
figure **3** shows a top perspective view of some components of a cooling system according to a second embodiment of the present invention;
figure **4** shows a top view of the cooling system of figure **2****;**
figure **5** shows a top perspective view of some components of a cooling system according to a third embodiment of the present invention;
figure **6** shows a top view of the cooling system of figure **5****;**
figure **7** shows is a perspective view of a cooling circuit associated to the systems of figure **1****,** **3** or **5****;**
figure **8** shows a bottom perspective view of the cooling system of figure **3****;**
figure **9** is a perspective view of the central body of the cooling system of figure **2****;**
figure **10** is a perspective view of a Peltier cell of the cooling system of figure **2****.**

### Detailed description

With reference to the attached figures, a cooling system, overall indicated by **10', 10", 10**^{III}, is shown, particularly for use in a machine (not shown in the attached figures) for processing, thus cooling, a mixture, such as for example a food mixture for the production of ice cream.

According to the present invention, as illustrated in figures **1-6** the cooling system **10', 10", 10**^{III} comprises a central body **1**', **1"**, **1**^{III} which in turn comprises a working cavity **100** suitable for housing the mixture to be cooled, directly or through a further container.

The working cavity **100** defines an axis **AXC** which is the rotation axis around which a possible rotor - for example one or more blades or scrapers of a creaming machine - arranged in the cavity **100** rotates, and/or is the symmetrical axis of the cavity **100** if it has a substantially cylindrical or prismatic shape and/or the axis of the cone, truncated cone, pyramid, or truncated pyramid possibly formed by the working cavity **100** (figure **1****).**

The central body **1', 1", 1**^{III} preferably forms external flanks extending substantially parallel or longitudinal to the axis **AXC** of the working cavity **100.**

The central body **1'**, **1", 1**^{III} is preferably made of a material having a high thermal conductivity such as for example aluminium, copper, steel, or other metallic material.

As shown in figures **1****,** **2****,** , the system **10'** comprises three or more Peltier cells **2** arranged laterally to the central body **1**', **1**", **1**^{III} and directly contacting the central body **1', 1", 1**^{III} itself.

Preferably, each Peltier cell **2** has an overall flat shape so as to form two greater faces each of which facing a direction of the space substantially opposite to that the other plate faces.

For this purpose, each Peltier cell **2** can have a substantially plate shape, preferably flat (figures **1-6****).**

Preferably, the Peltier cells **2** are arranged so as to have one of the greater faces contacting the central body **1'**, **1**", **1**^{III}, so as to promote the heat transmission to and from the body **1'.**

For this purpose, the central body **1**', **1", 1**^{III} preferably forms one or more coupling faces **11** configured for coupling with a respective greater face of a Peltier cell **2,** particularly with the cold face of such cell; for this purpose, each coupling face **11** can have a substantially flat shape, or otherwise substantially complementary to - or having the cast of - the greater face of the Peltier cell **2.**

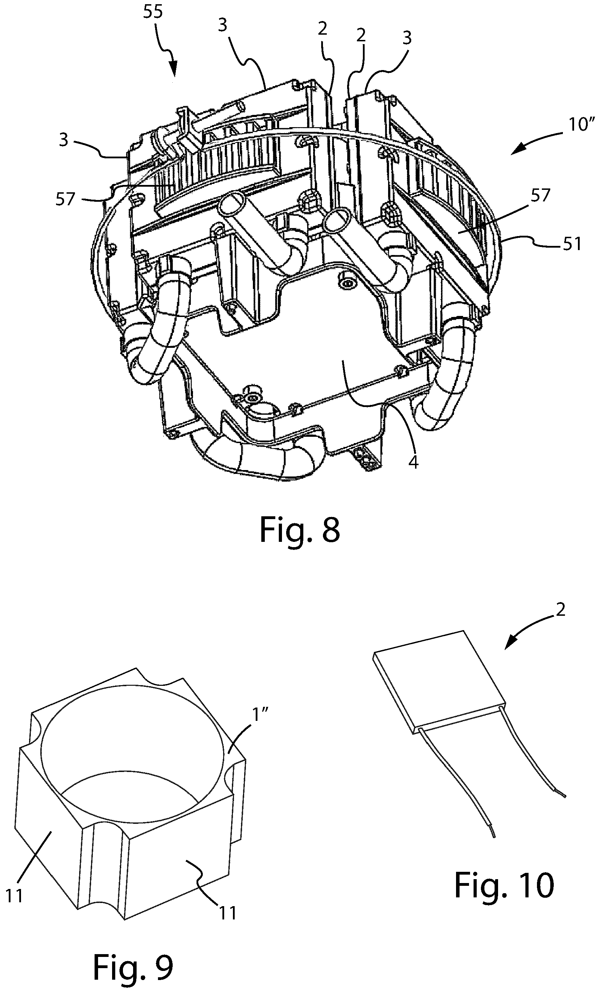

The one or more coupling faces **11** is preferably formed on the external flanks of the central body **1', 1", 1**^{III} (figure **9**).

The cooling system **10'** comprises heat sinks **3** in a number corresponding to the number of Peltier cells **2** and suitable for keeping the temperature of the same under control during the steps of cooling the food mixture.

The cooling system **10'** can comprise a variable number of Peltier cells **2** depending on the requirements, therefore on the required cooling power, which can be arranged both laterally to and below the central body **1**', **1**", **1**^{III}.

According to the present invention, the cooling system **10'** comprises at least three Peltier cells **2** and accordingly a corresponding number of heat sinks **3** associated to each Peltier cell (figures **1****,** **2****).**

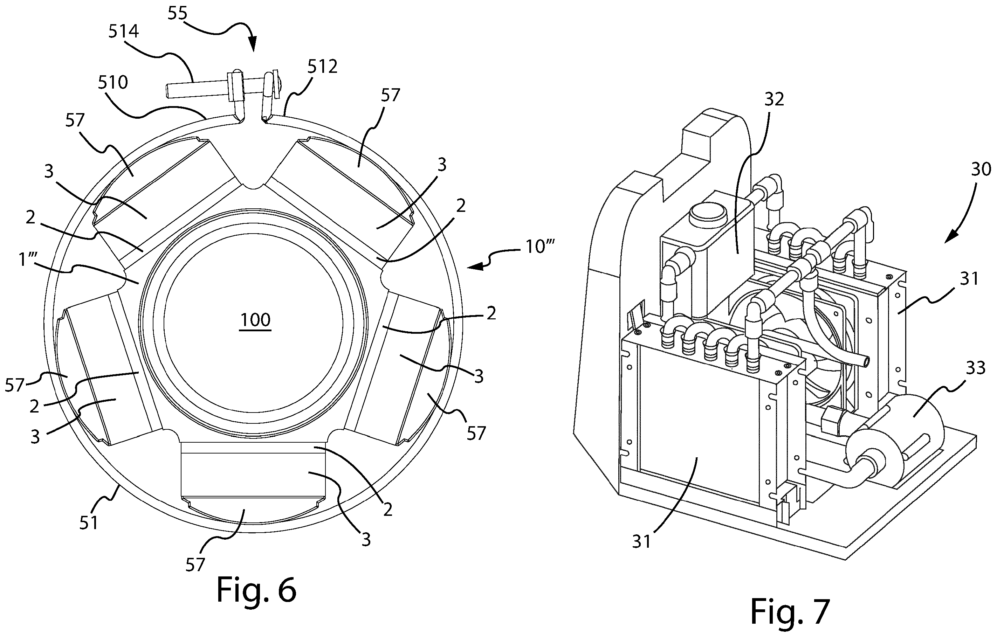

The cooling system **10'** can possibly comprise even at least four Peltier cells **2** (figures **3****,** **4****),** at least five Peltier cells **2** (figures **5****,** **6****),** at least six Peltier cells **2,** at least seven Peltier cells **2,** at least eight Peltier cells **2,** and for example three, four, five, six, seven, eight, nine, ten, or more Peltier cells **2** each of which arranged for example on the external flanks of the central body **1', 1", 1**^{III}.

The cooling system **10'** further comprises an assembling system **5'** which keeps the central body **1', 1", 1**^{III}, the three or more Peltier cells **2** and the corresponding three or more cooling subunits **3** assembled.

According to the invention the assembling system **5**' in turn comprises a belt element **51** and a tensioner **55.**

The belt element **51** extends around the at least three Peltier cells **2** and the relative heat sinks **3.**

The tensioner **55** is configured for tensioning the belt element **51** by reducing or tending to reduce the perimeter of the portion of the belt element **51** extending around the at least three Peltier cells **2** and the one or more possible heat sinks **3** so as to tighten the at least three Peltier cells **2** against the external flanks of the central body **1'**, **1**", **1^{III}** and fix the at least three Peltier cells **2** to said external flanks.

For this purpose, the tensioner **55** is configured for tensioning the belt element **51** so as to approach or tend to approach each other at least two proximity sections **510, 512** of the belt element **51** - for example two single proximity sections 510, 512 - adjacent to the tensioner **55** - for example the closest to the tensioner **55** - so as to tighten the at least three Peltier cells **2** against the external flanks of the central body **1**', **1**", **1**^{III} and fix the at least three Peltier cells **2** to said external flanks.

The belt element **51** can comprise for example a wire (figures **1-6****),** a band or strip, a chain, a membrane, a coil spring; preferably, such elements can be made for example of steel or other metallic material but can be also made of a synthetic resin or other non-metallic materials.

Making the belt element **51** of metallic material, especially if in the form of a metallic wire, facilitates its sliding on the mechanical adapters **57** while the element **51** is tightened around them, or otherwise tensioned.

The belt element **51** is preferably coated by a layer of anti-corrosion material.

The tensioner **55** can comprise for example a screw drive configured for approaching each other the two proximity sections **510, 512** of the belt element **51,** for example by pulling or pushing the two proximity sections **510, 512** so as to slide them in directions substantially parallel or longitudinal to the sections **510, 512** themselves by reducing the perimeter of the belt element **51.**

For this purpose, the tensioner **55** can comprise for example a screw **514** configured for screwing and unscrewing in a nut screw by rotating around an axis substantially parallel to the twc proximity sections **510, 512** (figures **1****,** **3, 5****).**

Alternatively, the tensioner **55** can comprise for example a cam, lever, or inclined plane system and be driven thereby.

Possibly, the screw 514 or other screw or a screw, cam, lever, or inclined plane drive of the tensioner 55 are configured for tensioning the belt element **51** by reducing or tending to reduce the perimeter of the portion of the belt element **51** extending around the at least three Peltier cells **2** and the one or more possible heat sinks **3** so as to tighten the at least three Peltier cells **2** against the external flanks of the central body **1', 1", 1^{III}** and fix the at least three Peltier cells **2** to said external flanks.

Possibly, a single screw 514 or another single screw, a single screw drive, a single cam, a single lever, or a single inclined plane can be configured for tensioning the belt element **51** by reducing or tending to reduce the perimeter of the portion of the belt element **51** extending around the at least three Peltier cells **2** and the one or more possible heat sinks **3** so as to tighten the at least three Peltier cells **2** against the external flanks of the central body **1', 1", 1^{III}** and fix the at least three Peltier cells **2** to said external flanks.

According to the invention, the assembling system 5' comprises a single belt element **51** and a single tensioner **55.**

Each tensioner 55 is configured for tensioning a single belt element 51 so as to reduce or tend to reduce the perimeter of the portion of the belt element **51** extending around all the three of the at least three Peltier cells **2** and the one or more possible heat sinks **3,** by tightening the at least three Peltier cells **2** against the external flanks of the central body **1**', **1**", **1^{III}** and fixing the at least three Peltier cells **2** to said external flanks.

Advantageously, the assembling system **5**' further comprises one or more mechanical adapters **57** each of which is interposed between the belt element **51** and one or more heat sinks **3** or otherwise one or more Peltier cells **2** so as to transmit to such cells **2** and possibly to the sinks **3** the thrust applied by the belt element **51** towards the working cavity **100** and/or towards the centre of the central body **1', 1", 1**^{III}.

Each mechanical adapter **57** can be made for example like a bearing or pad preferably made of a relatively rigid and slick material such as for example polyoxymethylene (POM or acetal resin), polyamide (PA), or polytetrafluoroethylene (Teflon (R)) so as to reduce the friction with the belt element **51.**

A reduced friction between the mechanical adapters **57** and the belt element **51** makes the tangential forces applied by the latter to the adapters **57** when it is tightened - o otherwise tensioned - and accordingly applied by the adapters **57** to the Peltier cells **2** negligible, improving the adherence and the contact of the adapters against the cells **2** and therefore the performance of the latter.

Still in order to reduce the friction between the belt element **51** and the mechanical adapters **57,** each of them preferably forms one or more ribs, corrugations, studs or other protrusions **570** on its face - or other surface - which rests against the belt element **51** or in any case faces it so as to reduce the surface contacting the belt element **51** (figures **1****,** **3, 5****).**

Indeed, the pressure between the Peltier cells **2** and the central body **1**', **1**", **1**^{III} is very important in order to keep the efficiency of the cooling system **10', 10", 10^{III}** high, while the pressure between the Peltier cells **2** and the heat sinks **3** is very important for the good operation of the Peltier cells **2** themselves, preventing them from overheating.

Preferably, the cooling system **10', 10", 10^{III}** further comprises a base element **4** made of a thermal insulating material suitable for acting as a base and meanwhile as a mounting mask for the cooling system **10** itself on the machine in which it is used.

Particularly, the heat sinks **3** can be of the liquid type and be fluidically or otherwise functionally connected to a cooling circuit **30,** illustrated in figure **7****,** comprising at least a radiator **31,** a tank **32,** and to a pump **33** for recirculating the cooling liquid and comprise at least an inlet piping and an outlet piping of the cooling liquid preferably made of copper.

As visible in figures **1-6****,** it consists of heat exchangers having the external shape for example of a block and in which the cooling liquid circulates due to the thrust of the pump **33.**

In each heat sink **3** the heat carrier liquid goes in and out through a respective inlet and outlet piping.

Advantageously, the cooling liquid can be water or any other type of cooling liquid.

Figure **7** illustrates a possible embodiment of the cooling circuit **30** inside a machine.

Furthermore, the Peltier cells **2** can be powered for example at **15** V by an electrical energy source arranged for example in the machine.

Each Peltier cell **2,** as illustrated in figure **10****,** preferably comprises a shell of two ceramic plates which sandwich semiconductors which, passed through by direct current, cool one of the two plates and heat the other.

In such case, the ceramic plate facing the central body **1', 1**", **1**^{III} will be cooled, thus cooling the content of the central body **1**', **1**", **1**^{III} itself, while the ceramic plate facing the opposite side will be heated in a controlled manner due to the heat sinks **3** associated to each Peltier cell **2.**

Possibly, by inverting the polarity of the electrical power of the Peltier cells **2,** these can be used to heat the ceramic plate facing the central body **1', 1", 1**^{III}, thus heating the content of the central body **1', 1", 1**^{III} itself, and instead cooling the ceramic plate facing the opposite side; in such case the heat sinks **3** are preferably deactivated, if they are active and not only passive components.

Still preferably, the base element **2** is made of synthetic resin.

The operation of the cooling system is as follows.

The mixture of ingredients to be cooled is inserted into the working cavity **100** and the machine, particularly its cooling system **10', 10", 10^{III},** activated.

Therefore, the semiconductors present in the Peltier cells **2** are passed through by a direct current, provided by the power supply present in the machine, which causes a side of them to be cooled, particularly that contacting the central body **1', 1", 1**^{III}, and the opposite side to be heated.

Meanwhile, the heat sinks **3** are activated, which due to the cooling circuit **30** are passed through by a cooling liquid suitable for keeping the temperature of the side of the Peltier cells **2** facing them under control.

Such system allows to obtain the freezing of the mixture inside the central body in about **180** seconds.

The features and advantages of the system being the object of the present invention are apparent from the preceding description; particularly, it is apparent that the same the belt element **51,** the same tensioner **55** and the same mechanical adapters **57** can be mounted without needing any modification in cooling systems **10', 10", 10**^{III} provided with a different number of Peltier cells **2;** this allows to remarkably standardize the required components to produce a wide range of cooling systems, to reduce the number of such components and their production costs due to the greater scale economies.

Reducing the production costs is also facilitated by the attitude of the belt element **51** and the tensioner **55** to be made with extremely simple shapes and mechanisms.

## Claims

1. Cooling system (**10', 10", 10^{III}**) for a machine for processing a mixture comprising:
- a central body **(1', 1", 1^{III}**) suitable for housing the mixture to be cooled and which forms external flanks;
- at least three Peltier cells **(2)** each of which resting on said external flanks of the central body
- a plurality of heat sinks **(3)** in a number corresponding to the number of Peltier cells **(2)** and configured for regulating the temperature of the at least three Peltier cells **(2)** by cooling them;
wherein said cooling system (**10**) further comprises an assembling system **(5')** in turn comprising a belt element **(51)** and a tensioner **(55)** and **characterised in that:**
- the belt element **(51)** extends around the at least three Peltier cells **(2)** and the heat sinks **(3);**
- the tensioner **(55)** is configured for tensioning the belt element **(51)** by reducing or tending to reduce the perimeter of the portion of the belt element **(51)** extending around the at least three Peltier cells **(2)** and the heat sinks **(3)** so as to tighten the at least three Peltier cells **(2)** against the external flanks of the central body (**1**', **1", 1^{III}**) and fix the at least three Peltier cells **(2)** to said external flanks;
- the tensioner **(55)** is configured for tensioning the belt element **(51)** for approaching or tending to approach each other at least two proximity sections **(510, 512)** of the belt element **(51)** adjacent to the tensioner **(55),** respectively by sliding, or tending to slide, the two proximity sections **(510, 512)** in directions substantially parallel or longitudinal to the sections **(510, 512)** themselves so as to tighten the at least three Peltier cells **(2)** against the external flanks of the central body **(1)** and fix the at least three Peltier cells **(2)** to said external flanks; the assembling system **(5')** comprising a single belt element **(51)** and a single tensioner **(55).**

2. Cooling system (**10**) according to claim **1,** in which the belt element **(51)** comprises one or more of the following elements: a wire **(51),** a band or strip, a chain, a membrane, wherein such elements are for example made of steel or other metallic material.

3. Cooling system (**10**) according to claim **2**, in which the belt element **(51)** comprises a single specimen of only one of the following elements: a wire **(51),** a band or strip, a chain, a membrane, wherein:
- such elements are for example made of steel or other metallic material.

4. Cooling system (**10**) according to one or more preceding claims, comprising at least four Peltier cells **(2),** or at least five Peltier cells **(2),** at least six Peltier cells **(2),** at least seven Peltier cells **(2),** at least eight Peltier cells **(2).**

5. Cooling system (**10**) according to one or more preceding claims, comprising one or more mechanical adapters **(57)** each of which is interposed between the belt element **(51)** and one or more Peltier cells **(2)** so as to transmit to these cells **(2)** the thrust applied by the belt element **(51)** towards the working cavity (**100**) and/or towards the centre of the central body **(1', 1", 1^{III}**).

6. Cooling system (**10**) according to one or more preceding claims, in which the tensioner **(55)** comprises a screw, cam, inclined plane, and/or lever drive configured for approaching or tending to approach each other the two proximity sections **(510, 512)** of the belt element **(51),** for example by pulling or pushing the two proximity sections **(510, 512).**

7. Cooling system (**10**) according to claim **5,** in which one or more of the mechanical adapters **(57)** are made of or otherwise contain synthetic resin.

8. Machine for the production of ice creams comprising a cooling system (**10', 10", 10^{III})** according to one or more preceding claims.

## Patentansprüche

1. Kühlsystem **(10', 10", 10^{III})** für eine Maschine zur Verarbeitung einer Mischung, umfassend:
- ein zentrales Gehäuse **(1', 1", 1^{III}**), das zur Aufnahme des zu kühlenden Gemisches geeignet ist und Außenflanken bildet;
- mindestens drei Peltier-Zellen **(2),** die jeweils an den genannten Außenflanken des Mittelkörpers anliegen
- eine Vielzahl von Kühlkörpern **(3),** deren Anzahl der Anzahl der Peltier-Zellen **(2)** entspricht und die dazu ausgelegt sind, die Temperatur der mindestens drei Peltier-Zellen **(2)** durch deren Kühlung zu regulieren;
wobei das Kühlsystem **(10)** ferner ein Montagesystem **(5')** umfasst, das seinerseits ein Riemenelement **(51)** und einen Spanner **(55)** umfasst, **und dadurch gekennzeichnet, dass:**
- das Riemenelement **(51)** verläuft um die mindestens drei Peltier-Zellen **(2)** und die Kühlkörper **(3)** herum;
- Die Spannvorrichtung **(55)** ist so ausgelegt, dass sie das Riemenelement **(51)** spannt, indem sie den Umfang des Abschnitts des Riemenelements **(51),** der sich um die mindestens drei Peltier-Zellen **(2)** und die Kühlkörper **(3),** um die mindestens drei Peltier-Zellen **(2)** gegen die Außenflanken des zentralen Körpers **(1', 1", 1^{III}**) zu spannen und die mindestens drei Peltier-Zellen **(2)** an den genannten Außenflanken zu befestigen;
- an den Spanner **(55)** ist so ausgelegt, dass er das Riemenelement **(51)** spannt, um mindestens zwei benachbarte Abschnitte **(510, 512)** des Riemenelements **(51)** an die Spannvorrichtung **(55)** anzunähern, indem zwei benachbarte Abschnitte **(510, 512)** in Richtungen verschoben werden oder dazu neigen, verschoben zu werden, die im Wesentlichen parallel oder in Längsrichtung zu den Abschnitten **(510, 512)** selbst, um die mindestens drei Peltier-Zellen **(2)** gegen die Außenflanken des Mittelkörpers **(1)** zu spannen und die mindestens drei Peltier-Zellen **(2)** an den genannten Außenflanken zu befestigen; wobei das Montagesystem **(5')** ein einzelnes Riemenelement **(51)** und einen einzelnen Spanner **(55)** umfasst.

2. Kühlsystem **(10)** gemäß Anspruch **1,** wobei das Riemenelement **(51)** eines oder mehrere der folgenden Elemente umfasst: einen Draht **(51),** ein Band oder einen Streifen, eine Kette, eine Membran, wobei diese Elemente beispielsweise aus Stahl oder einem anderen metallischen Werkstoff bestehen.

3. Kühlsystem **(10)** nach Anspruch **2,** wobei das Riemenelement **(51)** aus einem einzigen Stück besteht, das nur eines der folgenden Elemente umfasst: einen Draht **(51),** ein Band oder einen Streifen, eine Kette, eine Membran, wobei:
- Solche Elemente bestehen beispielsweise aus Stahl oder einem anderen metallischen Werkstoff.

4. Kühlsystem **(10)** gemäß einem oder mehreren der vorstehenden Ansprüche, umfassend mindestens vier Peltier-Zellen **(2)** oder mindestens fünf Peltier-Zellen **(2),** mindestens sechs Peltier-Zellen **(2),** mindestens sieben Peltier-Zellen **(2),** mindestens acht Peltier-Zellen **(2).**

5. Kühlsystem **(10)** gemäß den vorstehenden Ansprüchen, umfassend einen oder mehrere mechanische Adapter **(57),** von denen jeder zwischen dem Riemenelement **(51)** und einer oder mehreren Peltier-Zellen **(2)** angeordnet ist, um auf diese Zellen **(2)** die vom Riemenelement **(51)** ausgeübte Kraft in Richtung des Arbeitsraums **(100)** und/oder in Richtung der Mitte des zentralen Körpers **(1', 1", 1^{III}**) zu übertragen.

6. Kühlsystem **(10)** gemäß einem oder mehreren der vorstehenden Ansprüche, wobei der Spanner **(55)** einen Schrauben-, Nocken-, Schrägflächen- und/oder Hebelantrieb umfasst, der so ausgelegt ist, dass er die beiden benachbarten Abschnitte **(510, 512)** des Riemenelements **(51)** einander anzunähern oder dazu zu veranlassen, einander anzunähern, beispielsweise durch Ziehen oder Drücken der beiden benachbarten Abschnitte **(510, 512).**

7. Kühlsystem **(10)** nach Anspruch **5,** wobei einer oder mehrere der mechanischen Adapter **(57)** aus Kunstharz bestehen oder anderweitig Kunstharz enthalten.

8. Maschine zur Herstellung von Speiseeis, die ein Kühlsystem **(10', 10", 10^{III})** gemäß einem oder mehreren der vorstehenden Ansprüche umfasst.

## Revendications

1. Système de refroidissement **(10', 10", 10^{III})** pour une machine destinée au traitement d'un mélange, comprenant:
- un corps central **(1', 1", 1^{III}**) destiné à contenir le mélange à refroidir et formant des flancs extérieurs;
- au moins trois cellules Peltier **(2),** chacune reposant sur lesdits flancs extérieurs du corps central
- une pluralité de dissipateurs thermiques **(3)** dont le nombre correspond à celui des cellules Peltier **(2)** et qui sont conçus pour réguler la température des au moins trois cellules Peltier **(2)** en les refroidissant;
dans lequel ledit système de refroidissement **(10)** comprend en outre un système d'assemblage **(5')** comprenant lui-même un élément de courroie **(51)** et un tendeur **(55), et caractérisé en ce que:**
- l'élément de courroie **(51)** s'étend autour des au moins trois cellules Peltier **(2)** et des dissipateurs thermiques **(3);**
- le tendeur **(55)** est conçu pour tendre l'élément de courroie **(51)** en réduisant ou en tendant à réduire le périmètre de la partie de l'élément de courroie **(51)** s'étendant autour des au moins trois cellules Peltier **(2)** et des dissipateurs thermiques **(3)** de manière à serrer les au moins trois cellules Peltier **(2)** contre les flancs externes du corps central **(1', 1", 1^{III}**) et à fixer les au moins trois cellules Peltier **(2)** auxdits flancs externes;
- le tendeur **(55)** est conçu pour tendre l'élément de courroie **(51)** de manière à rapprocher ou à tendre à se rapprocher l'une de l'autre au moins deux sections adjacentes **(510, 512)** de l'élément de courroie **(51)** adjacentes au tendeur **(55),** respectivement en faisant glisser, ou en tendant à faire glisser, les deux sections de proximité **(510, 512)** dans des directions sensiblement parallèles ou longitudinales par rapport aux sections **(510, 512)** elles-mêmes de manière à serrer les au moins trois cellules Peltier **(2)** contre les flancs externes du corps central **(1)** et à fixer les au moins trois cellules Peltier **(2)** auxdits flancs externes; le système d'assemblage **(5')** comprenant un seul élément de courroie **(51)** et un seul tendeur **(55).**

2. Système de refroidissement **(10)** selon la revendication **1,** dans lequel l'élément de courroie **(51)** comprend un ou plusieurs des éléments suivants: un fil métallique **(51),** une bande ou une lamelle, une chaîne, une membrane, ces éléments étant par exemple réalisés en acier ou en un autre matériau métallique.

3. Système de refroidissement **(10)** selon la revendication **2,** dans lequel l'élément de courroie **(51)** comprend un seul élément parmi les suivants: un fil **(51),** une bande ou une lamelle, une chaîne, une membrane, dans lequel:
- Ces éléments sont par exemple fabriqués en acier ou dans d'autres matériaux métalliques.

4. Système de refroidissement **(10)** selon une ou plusieurs des revendications précédentes, comprenant au moins quatre cellules Peltier **(2),** ou au moins cinq cellules Peltier **(2),** au moins six cellules Peltier **(2),** au moins sept cellules Peltier **(2),** au moins huit cellules Peltier **(2).**

5. Système de refroidissement **(10)** selon les revendications précédentes, comprenant un ou plusieurs adaptateurs mécaniques **(57)** dont chacun est intercalé entre l'élément de courroie **(51)** et une ou plusieurs cellules Peltier **(2)** de manière à transmettre à ces cellules **(2)** la poussée exercée par l'élément de courroie **(51)** vers la cavité de travail **(100)** et/ou vers le centre du corps central **(1', 1", 1**^{III}).

6. Système de refroidissement **(10)** selon une ou plusieurs des revendications précédentes, dans lequel le tendeur **(55)** comprend un entraînement à vis, à came, à plan incliné et/ou à levier, conçu pour rapprocher ou tendre à rapprocher l'une de l'autre les deux sections adjacentes **(510, 512)** de l'élément de courroie **(51),** par exemple en tirant ou en poussant les deux sections de proximité **(510, 512).**

7. Système de refroidissement **(10)** selon la revendication **5,** dans lequel un ou plusieurs des adaptateurs mécaniques **(57)** sont constitués de résine synthétique ou en contiennent.

8. Machine pour la fabrication de crèmes glacées, comprenant un système de refroidissement **(10', 10", 10^{III})** selon une ou plusieurs des revendications précédentes.
